# EUROPÄISCHE PATENTSCHRIFT

(11) **EP 2 202 758 B1**
(45) Veröffentlichungstag und Bekanntmachung des Hinweises auf die Patenterteilung: **03.07.2019**
(21) Anmeldenummer: 09015538.3
(22) Anmeldetag: 16.12.2009
(51) Int. Cl.: H01B 9/00, B60M 1/00

(54) **Erdungskabel zur Erdung von Eisenbahneinrichtungen**
Grounding cable for the grounding of railways apparatuses
Câble pour la mise à terre des équipments dans les chemins de fer

(30) Priorität: 24.12.2008 DE 102008063086
(43) Veröffentlichungstag der Anmeldung: 30.06.2010
(73) Patentinhaber: Bayerische Kabelwerke AG, 91154 Roth (DE)
(72) Erfinder: Wolfsberger, Friedrich, 91177 Thalmässing (DE)
(74) Vertreter: FDST Patentanwälte

(56) Entgegenhaltungen:
- DE-A1- 3 222 573
- DE-C- 471 814
- DE-U1- 7 706 893
- DE-U1-202007 009 370
- RU-C2- 2 185 970
- US-A- 5 223 349
- TKD Kabel: "ESUY Kupfer-Erdungsseil", INET , 1. Mai 2002 (2002-05-01), XP002693819, Gefunden im Internet: URL:http://www.tkd-kabel.de/datenblaetter/ 01/01.05.02.pdf [gefunden am 2013-03-14]
- -: "Bahn Praxis E 1-2007", , 1 January 2007 (2007-01-01), pages 1-8, XP055495246, Retrieved from the Internet: URL:https://www.uv-bund-bahn.de/fileadmin/ /Dokumente/Publikationen/BahnPraxis_E/Bahn PraxisE-2007_01.pdf [retrieved on 2018-07-25]
- -: "druseidt Elektrotechnik 2005", , 1 January 2005 (2005-01-01), pages 1-84, XP055495379, Retrieved from the Internet: URL:https://web.archive.org/web/2008101008 2019if_/http://www.druseidt.de:80/pdf/kat2 eng.pdf [retrieved on 2018-07-25]

## Beschreibung

Die Erfindung betrifft ein Erdungskabel zur Erdung von Eisenbahneinrichtungen.

Bei Installationen im Freiland, wie beispielsweise bei Eisenbahneinrichtungen, ist oftmals eine elektrische Erdung der Einrichtungen vorgeschrieben oder erforderlich. Hierzu werden so genannte Erdungskabel eingesetzt, die an den zu erdenden Gegenstand angeschlossen sind. Unter Eisenbahneinrichtungen werden allgemein alle zu erdenden Einrichtungen im Bahnhofsbereich oder im Bereich einer Bahntrasse verstanden, wie beispielsweise Handläufe oder auch Schallschutzwände oder prinzipiell auch die Eisenbahnschienen selbst. Bei Eisenbahnschienen wird an deren Grundkörper in regelmäßigen Abständen das Erdungskabel üblicherweise mit Hilfe eines Kabelschuhs unmittelbar angeschraubt.

Aufgrund der Anordnung im Freien sind die Erdungskabel den Witterungseinflüssen ausgesetzt und müssen daher eine hohe Beständigkeit gegenüber den Umwelteinflüssen aufweisen. Heutzutage werden daher als Erdungskabel üblicherweise Kupferkabel eingesetzt. Die Erdungskabel bestehen beispielsweise aus miteinander verseilten Einzellitzen, wobei die Einzellitzentypischerweise wiederum aus einer Vielzahl von einzelnen Kupferdrähten bestehen.

Aufgrund des in den letzten Jahren erheblich gestiegenen Materialpreises für reines Kupfer sehen sich die Betreiber derartiger Anlagen, insbesondere Bahnanlagen, zunehmend mit dem Problem der Entwendung der Kabel konfrontiert. Die entwendeten Erdungskabel werden üblicherweise über Recyclingeinrichtungen wieder dem Wertstoffkreis zugeführt. Durch die Entwendung der Erdungskabel entstehen bei den Betreibern hohe Schäden.

Zur Vermeidung des Diebstahls der Erdungskabel ist prinzipiell der Einsatz von anderen Materialien für die Einzeldrähte möglich. Aufgrund der hohen Anforderungen im Freilandeinsatz sind Erdungskabel aus Nicht-Kupferdrähten jedoch nur bedingt geeignet. So besteht beispielsweise bei der Verwendung von Einzeldrähten aus Aluminium oder einer Aluminiumlegierung unter anderem oftmals das Problem der Korrosion. Zudem sind derartige Erdungskabel sehr steif. Bei der Verwendung von Stahl als Leitermaterial besteht das Problem der gegenüber Kupfer geringen Leitfähigkeit und zudem das Problem, dass eine vergleichsweise hohe Steifigkeit gegeben ist, die bei der Montage der Erdungskabel hinderlich ist.

Aus der RU 2 185 970 C2 ist ein Leiterseil aus mehreren Einzeldrähten zur Verbindung von Schienen zu entnehmen, welches in einer Ausführungsvariante einen zentralen Kerndraht aus Stahl sowie eine äußere Lage aus beispielsweise kupferbeschichteten Stahldrähten aufweist.

Zu Zwecken des Diebstahlschutzes ist es aus der DE 20 2007 009 370 U1 bekannt, bei einer Kupferlitze in Zwickelbereichen zwischen Kupferdrähten galvansierte Eisendrähte einzubringen.

Der Erfindung liegt die Aufgabe zugrunde, ein Erdungskabel mit verbessertem Diebstahlschutz anzugeben.

Die Aufgabe wird erfindungsgemäß gelöst durch ein Erdungskabel zur Erdung von Eisenbahneinrichtungen mit den Merkmalen des Anspruchs 1. Das Erdungskabel weist eine Mehrzahl von Einzeldrähten auf, wobei zumindest ein Teil der Einzeldrähte als Kombinationsdrähte ausgebildet ist, die zwei unterschiedliche Metalle aufweisen. Die Kombinationsdrähte umfassen hierbei einen Drahtkern aus einem ersten Metall und einen diesen umgebenden Kupfermantel.

Diese Ausgestaltung beruht auf der Überlegung, den Recyclingwert der Erdungskabel dadurch zu verringern, dass bewusst "Verunreinigungen" in das ansonsten reine Kupfermaterial eingebracht werden und somit den Anreiz für den Diebstahl zu minimieren. Die der Erfindung zugrunde liegende Idee setzt also nicht zwingend auf einen Material-Austausch, um die Menge des verwendeten Kupfermaterials zu reduzieren. Dies beruht auf der Überlegung, dass nur für reines Kupfer hohe Recyclingwerte erzielt werden. Sobald jedoch in dem Kupfermaterial Verunreinigungen durch Nicht-Kupfermetalle enthalten sind, sinkt der Recyclingwert deutlich und ist somit für Diebe nicht mehr attraktiv. Hierzu reicht es bereits aus, wenn einzelne Nicht-Kupferdrähte enthalten sind.

Die Ausgestaltung beruht weiterhin auf der Überlegung, dass das einfache Einziehen von Nicht-Kupferdrähten beispielsweise zu Korrosionsproblemen führen kann.

Durch die Integration von den speziellen Kombinationsdrähten, die vorzugsweise lediglich aus einem verkupferten Drahtkern aus einem anderen Material bestehen, werden daher zum einen die Korrosionsprobleme vermieden und zum anderen wird die gewünschte Verunreinigung in das Gesamtmaterial eingebracht. Diese Kombinationsdrähte bilden daher quasi Verunreinigungsdrähte. Es ist daher auch ausreichend und in bevorzugter Ausgestaltung auch vorgesehen, wenn nur ein geringer Teil der Einzeldrähte als Kombinationsdrähte ausgebildet ist und die Mehrzahl aus normalen Leiterdrähten, insbesondere Kupferdrähten gebildet ist. Ein weiterer besonderer Vorteil ist darin zu sehen, dass - je nach Anteil der Kombinationsdrähte - die elektrischen Eigenschaften sowie die Resistenz gegenüber den Umwelteinflüssen denen eines Kupfer-Erdungskabels zumindest weitgehend entspricht.

Auch wenn sich mit einem derartigen Kabel der "Erst-Diebstahl" nicht verhindern lässt, da die Kombinationsdrähte aufgrund ihrer Ummantelung von außen von einen Kupferdrähten nicht unterscheidbar sind, werden doch zumindest "FolgeDiebstähle" vermieden. Denn spätestens bei der Recyclingeinrichtung und beim Aufbereiten der Einzeldrähte des Erdungskabels wird erkannt, dass es sich um vergleichsweise wertloses verunreinigtes Kupfer handelt, so dass die Attraktivität für zukünftige Diebstähle reduziert ist.

Derartige ummantelte Drähte werden in an sich bekannter Weise hergestellt. Solche Kombinationsdrähte werden beispielsweise als Schweißstäbe oder Schweißdrähte beim elektrischen Schutzgasschweißen eingesetzt. Um die Kabelkosten gering zu halten, wird daher auf derartige etablierte Herstellungsverfahren für solche Kombinationsdrähte zurückgegriffen.

Zweckdienlicherweise ist das Erdungskabel hierbei als ein flexibles Erdungsseil ausgebildet, welches eine Vielzahl von miteinander verseilten Einzellitzen aufweist, die jeweils aus mehreren Einzeldrähten ausgebildet sind. Das Erdungsseil besteht hierbei beispielsweise aus sieben / neunzehn oder auch aus 37 Einzellitzen, je nach dem, ob das Seil ein-, zwei-, drei-, oder auch mehrlagig ausgebildet ist. Die Ausgestaltung als flexibles Erdungsseil ist für eine möglichst einfache Montage von besonderer Bedeutung, da oftmals relativ kurze Erdungskabel eingesetzt werden, die in einem engen Biegeradius verlegt werden müssen.

Gemäß einer bevorzugten Ausgestaltung weist nur ein Teil der Einzellitzen Kombinationsdrähte auf. Die übrigen Einzellitzen bestehen vorzugsweise aus gleichartigen Einzeldrähten aus einem homogenen Leitermaterial, insbesondere aus Kupfereinzeldrähten. Hierbei ist insbesondere vorgesehen, dass die Mehrzahl der Einzellitzen aus gleichartigen Einzeldrähten bestehen und nur eine geringe Teilzahl Kombinationsdrähte aufweist.

Zweckdienlicherweise ist insbesondere ergänzend vorgesehen, dass eine jeweilige Einzellitze gebildet ist aus Kombinationsdrähten und einfachen Leiterdrähten, insbesondere Kupferdrähten. Auch bei der jeweiligen Einzellitze sind vorzugsweise nur vereinzelte Kombinationsdrähte neben normalen Leiterdrähten vorgesehen. Insbesondere ist die jeweilige Einzellitze gebildet aus einer Vielzahl von Kupferdrähten und einer geringeren Anzahl, beispielsweise 1 bis 3 an Kombinationsdrähten.

Gemäß einer zweckdienlichen Weiterbildung ist zumindest eine der Einzellitzen mit einer zähflüssigen Füllmasse, insbesondere Dichtmasse getränkt, d.h. der Freiraum zwischen den Einzeldrähten der Einzellitze ist mit der Füllmasse verfüllt. Als Füllmasse wird insbesondere eine an sich übliche Dichtmasse zur Abdichtung herangezogen, beispielsweise ein sogenanntes Petrolat, aber auch Paraffin oder eine bituminöse Masse. Diese Füllmasse bildet quasi eine weitere Verunreinigung und wirkt sich wertmindernd aus.

Zweckdienlicherweise ist eine zentrale, mit der Füllmasse versehene Kernlitze vorgesehen. Aus herstellungstechnischen Gründen ist diese Kernlitze vorzugsweise die einzige Einzellitze mit Füllmasse.

Weiterhin ist vorgesehen, dass neben den Kombinationsdrähten ausschließlich Kupferdrähte als Einzeldrähte eingesetzt sind, so dass insgesamt das Erdungskabel von außen als ein homogenes Kabel aus Voll-Kupfermaterial erscheint.

Als Drahtkern wird zweckdienlicherweise entweder Stahl oder Aluminium herangezogen. Unter Aluminium wird hierbei auch eine Aluminiumlegierung verstanden. Als Stahlkern wird beispielsweise ein Edelstahlkern herangezogen.

Weiterhin werden innerhalb eines Erdungskabels Kombinationsdrähte mit Drahtkernen aus unterschiedlichen Metallen, also beispielsweise aus Aluminium und Stahl, eingesetzt. Über die Mischung innerhalb des Erdungskabels werden beispielsweise elektrische, magnetische oder auch mechanische Eigenschaften nach Bedarf eingestellt.

Zudem beträgt der Anteil des gesamten Drahtkernmaterials des Erdungskabels weniger als 50 Gew.% - bezogen auf das Gesamtgewicht des für das Erdungskabel verwendeten Metalls bei den Einzeldrähten. Den größten Anteil weist daher Kupfer mit seinen guten elektrischen Eigenschaften auf. Wie bereits erläutert, ist die Intention der der Erfindung zugrunde liegenden Idee darin zu sehen, den Recyclingwert nicht etwa durch Materialtausch, sondern durch das Einbringen von Verunreinigungen zu minimieren. Vor diesem Hintergrund ist zweckdienlicherweise auch vorgesehen, dass der Anteil des gesamten Drahtkern-Materials lediglich im Bereich zwischen 1-10 Gew.% und vorzugsweise unter 5 Gew.% liegt. Alternativ hierzu ist vorgesehen, eine bereits mit einfachen Mitteln erfassbare "Verunreinigung" im Bereich zwischen 10 Gew.% und 50 Gew.% vorzusehen. Derartig hohe Anteile lassen sich beispielsweise in einfacher Weise aufgrund ihres veränderten magnetischen Verhaltens bereits bei einer Metall-Sammelstelle erkennen, so dass die Kabel sofort ausgesondert werden können.

Um ein möglichst einfaches und kostengünstiges Herstellen des Erdungskabels zu ermöglichen, werden vorzugsweise identisch ausgebildete Einzellitzen mit jeweils zumindest einem Kombinationsdraht eingesetzt. Hierdurch ist quasi jeder der miteinander verseilten Einzellitzen durch das Einziehen zumindest eines Kombinationsdrahtes verunreinigt und damit unbrauchbar gemacht.

Das Erdungskabel weist regelmäßig einen die Einzeldrähte insgesamt umgebenden Kabelmantel zur Isolierung auf. Gemäß einer bevorzugten Ausgestaltung ist in diesem Kabelmantel eine von außen optisch erkennbare Markierung eingearbeitet. Die Markierung dient als Hinweis auf die Einlagerung der Kombinationsdrähte, so dass bereits von außen am Kabelmantel erkennbar ist, dass das Erdungskabel mit Verunreinigungen versehen ist. Damit werden Folgediebstähle zuverlässig verhindert.

Der Kabelmantel ist insbesondere aus einem temperaturbeständigen und insbesondere vernetzten Polyethylen ausgebildet. Bei einer derartigen Ausgestaltung ist es ausreichend, wenn lediglich eine Lage Kabelmantel um die miteinander verseilten Einzellitzen vorgesehen ist. Herkömmliche Erdungskabel weisen oftmals einen zweilagigen Kabelmantel aus PVC auf.

Die Aufgabe wird erfindungsgemäß weiterhin gelöst durch eine Eisenbahneinrichtung, insbesondere Einsenbahnschiene mit einem daran befestigten, derartigen Erdungskabel gemäß Anspruch 12.

Ausführungsbeispiele der Erfindung werden nachfolgend anhand der Figuren näher erläutert. Es zeigen jeweils in schematischen und teilweise stark vereinfachten Darstellungen:
- Fig. 1: eine Querschnittdarstellung eines Erdungskabels,
- Fig. 2: eine Querschnittdarstellung eines Kombinationsdrahtes und
- Fig. 3: eine ausschnittsweise in einer Seitenansicht dargestellte Eisenbahnschiene mit daran befestigtem Erdungskabel.

In den Figuren sind gleich wirkende Teile mit den gleichen Bezugszeichen versehen.

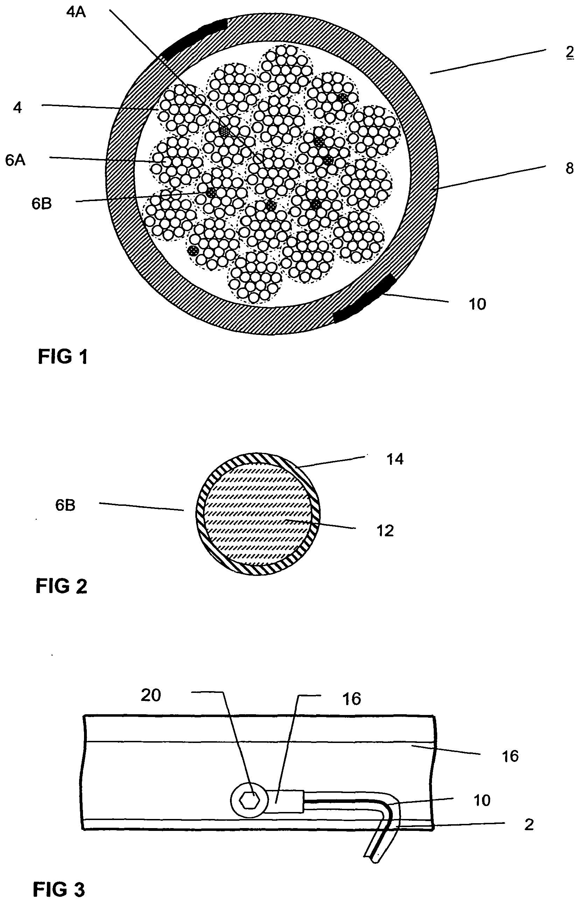

Das Erdungskabel 2 gemäß Fig. 1 ist als ein Erdungsseil ausgebildet mit im Ausführungsbeispiel insgesamt neunzehn Einzellitzen4, die miteinander verseilt sind. Hierzu sind um eine zentrale, als Kernlitze 4A bezeichnete Einzellitze 4 die restlichen Einzellitzen 4 angeordnet. Die Einzellitzen 4 wiederum bestehen aus einer Vielzahl von Einzeldrähten 6A,6B. So besteht eine einzelne Einzellitze 4 beispielsweise aus zehn bis zwanzig Einzeldrähten 6A,6B. Die eine Einzellitze4 bildenden Einzeldrähte 6A,6B sind lediglich zur Illustration in der Fig. 1 durch einen strichpunktierten Kreis umgeben. Die Einzeldrähte 6A,6B bestehen aus einem leitenden Material, insbesondere aus Metall. Die Gesamtzahl der Einzellitzen4 ist von einem im Ausführungsbeispiel einlagigen Kabelmantel 8 zu Isolationszwecken umgeben. In den Kabelmantel 8 sind an dessen Außenseite im Ausführungsbeispiel gegenüberliegende linienförmige Markierungen 10 eingebracht. Die Markierung besteht insbesondere aus einer charakteristischen Farbgebung. Als Farbe wird hier eine Farbe ohne spezielle elektrische Bedeutung, wie beispielsweise blau, verwendet.

Bei dem Kabelmantel handelt es sich vorzugsweise um ein vernetztes, hoch temperaturbeständiges Polyethylen. Alternativ zu dem einlagigen Kabelmantel 8 aus diesem PE-Material kann auch eine mehrlagige Ausbildung aus PVC oder auch ein anderes Isoliermaterial herangezogen werden.

Wie aus der Darstellung gemäß der Fig. 1 zu entnehmen ist, weisen einige der Einzellitzen 4 zwei Arten von Einzeldrähten 6A,6B auf. Während die Mehrzahl der Einzeldrähte aus herkömmlichen Kupfer-Einzeldrähten 6A gebildet ist, weisen diese speziellen Einzellitzen 4 zusätzlich noch so genannte Kombinationsdrähte 6B auf.

Im Unterschied zu dem in Fig. 1 dargestellten Ausführungsbeispiel besteht die Möglichkeit, dass für das Erdungskabel nur gleichartige Einzellitzen 4 mit jeweils einer identischen Anzahl von Kombinationsdrähten 6B herangezogen werden.

Vorzugsweise ist die zentrale Kernlitze 4A mit einer zähflüssigen Füllmasse in den Freiräumen zwischen den einzelnen Einzeldrähten 6A versehen.

Der Aufbau der Kombinationsdrähte 6B ist aus der Fig. 2 zu entnehmen. Dabei ist zu erkennen, dass diese Kombinationsdrähte 6B einen Drahtkern 12 sowie einen Kupfermantel 14 aufweisen. Bei dem Kupfermantel handelt es sich vorzugsweise lediglich um einen dünnen Überzug, so dass also der Drahtkern 12 quasi lediglich "verkupfert" ist. Die vom Kupfermantel 14 gebildete Ringfläche beträgt daher lediglich wenige % der Gesamtfläche des Kombinationsdrahtes 6B.

Als Material für den Drahtkern 12 wird vorzugsweise Aluminium oder Stahl herangezogen. Innerhalb des Erdungskabels können auch unterschiedliche Materialien für die Drahtkerne 12, also unterschiedliche Kombinationsdrähte 6B eingezogen sein. Das Erdungskabel 2 weist insgesamt einen durch die Einzellitzen 4 insgesamt gebildeten Leiterquerschnitt im Bereich von etwa 40 bis 95 mm² auf. Das Erdungskabel 2 ist insgesamt dafür ausgelegt, hohe Kurzschlussströme im Bereich beispielsweise bis zu etwa 50 kA über eine Zeitdauer von beispielsweise 100 ms ableiten zu können, ohne dass eine Beschädigung, beispielsweise eine thermische Schädigung des Kabelmantels auftritt.

Durch die hier beschriebene spezielle Ausgestaltung des Erdungskabels mit den vereinzelt eingezogenen Kombinationsdrähten ist insgesamt ein sehr korrosionssicheres, robustes und zugleich im Hinblick auf die Verlegung und Montage biegeflexibles Erdungskabel 2 geschaffen, welches insbesondere auch aufgrund des hohen Kupfer-Anteils gute elektrische Eigenschaften aufweist. Von besonderer Bedeutung ist der integrierte Diebstahlschutz, der durch das Einziehen der Kombinationsdrähte und der damit einhergehenden Verunreinigung des ansonsten reinen Kupfermaterials verbunden ist. Wichtig für die Funktion des Diebstahlschutzes ist hierbei auch die in den Außenmantel eingebrachte Markierung 10.

Ein derartiges Erdungskabel 2 wird in an sich bekannter Weise an eine Eisenbahnschiene 16 mit Hilfe eines Kabelschuhs 18 befestigt. Die Befestigung erfolgt hierbei über eine Schraube 20, die unmittelbar in eine Seitenwange der Schiene 16 eingeschraubt wird. Der Kabelschuh 18 besteht hierbei vorzugsweise aus Kupfer. Innerhalb des Kabelschuhs 18 sind die Einzellitzen 4 von dem Kabelmantel 8 befreit und beispielsweise nach Art einer Crimpverbindung kontaktiert.

## Patentansprüche

1. Erdungskabel (2) zur Erdung von Eisenbahneinrichtungen (16) mit einer Mehrzahl von Einzeldrähten (6A,6B), wobei
zumindest ein Teil der Einzeldrähte als Kombinationsdrähte (6B) ausgebildet ist, die zwei unterschiedliche Metalle aufweisen, nämlich einen Drahtkern (12) aus einem Nicht-Kupfermetall und einen diesen umgebenden Kupfermantel (14), **dadurch gekennzeichnet, dass**
- neben den Kombinationsdrähten (6B) ausschließlich Kupferdrähte (6A) als Einzeldrähte eingesetzt sind,
- mehrere unterschiedliche Kombinationsdrähte (6B) mit Drahtkernen (12) aus unterschiedlichen Metallen eingesetzt werden, und dass
- der Anteil des gesamten Drahtkern-Materials unter 50 Gew.% liegt, bezogen auf das Gesamtgewicht der Summe aller Einzeldrähte (6A,6B).

2. Erdungskabel (2) nach Anspruch 1, das als Erdungsseil ausgebildet ist mit einer Vielzahl von miteinander verseilten Einzellitzen (4), die jeweils aus mehreren Einzeldrähten (6A,6B) ausgebildet sind.

3. Erdungskabel (2) nach Anspruch 2, bei dem nur ein Teil der Einzellitzen (4) Kombinationsdrähte (6B) aufweist.

4. Erdungskabel (2) nach dem vorhergehenden , bei dem eine jeweilige Einzellitze (4) gebildet ist aus Kombinationsdrähten (6B) und einfachen Leiterdrähten (6A), insbesondere Kupferdrähten.

5. Erdungskabel (2) nach einem der Ansprüche 2 bis 4, bei dem zumindest eine der Litzen (4) mit einer Dichtmasse getränkt ist.

6. Erdungskabel (2) nach einem der Ansprüche 2 bis 5,
bei dem der durch die Einzellitzen (4) insgesamt gebildete Leiterquerschnitt im Bereich von 40 bis 95 mm² liegt.

7. Erdungskabel (2) nach einem der vorhergehenden Ansprüche,
bei dem der Drahtkern (12) wahlweise ein Stahl- oder ein Aluminiumkern ist.

8. Erdungskabel (2) nach einem der vorhergehenden Ansprüche ,
bei dem der Anteil des gesamten Drahtkern-Materials im Bereich zwischen 1 bis 10 Gew. % oder im Bereich zwischen 10 bis 50 Gew.% liegt.

9. Erdungskabel (2) nach einem der vorhergehenden Ansprüche,
bei dem identisch ausgebildete Einzellitzen (4) mit jeweils zumindest einem Kombinationsdraht (6B) verwendet sind.

10. Erdungskabel (2) nach einem der vorhergehenden Ansprüche, mit einem Kabelmantel (8), in dem ein von außen optisch erkennbare Markierung (10) als Hinweis auf die Kombinationsdrähte (6B) eingearbeitet ist.

11. Erdungskabel (2) nach Anspruch 1,
- das als Erdungsseil ausgebildet ist mit einer Vielzahl von miteinander verseilten Einzellitzen (4), die jeweils aus mehreren Einzeldrähten (6A,6B) ausgebildet sind, wobei
- der durch die Einzellitzen (4) insgesamt gebildete Leiterquerschnitt im Bereich von 40 bis 95 mm² liegt,
- Kombinationsdrähte (6B) mit Drahtkernen (12) aus unterschiedlichen Metallen eingesetzt sind
- nur ein Teil der Einzeldrähte (6A, 6B) als Kombinationsdrähte (6B) ausgebildet ist,
- zumindest eine der Litzen (4) mit einer Dichtmasse getränkt ist.

12. Eisenbahneinrichtung (16) mit einem daran befestigen Erdungskabel (2) nach einem der vorhergehenden Ansprüche.

## Claims

1. Earthing cable (2) for earthing railway devices (16) comprising a plurality of individual wires (6A, 6B), wherein at least some of the individual wires are designed as combination wires (6B) which contain two different metals, specifically a wire core (12) composed of a non-copper metal and a copper sheath (14) which surrounds the said wire core, **characterized in that**
- in addition to the combination wires (6B), only copper wires (6A) are used as individual wires,
- a plurality of different combination wires (6B) with wire cores (12) composed of different metals are used, and **in that**
- the proportion of the total wire core material lies below 50% by weight based on the total weight of the sum of all individual wires (6A, 6B).

2. Earthing cable (2) according to Claim 1 which is designed as a earthing line with a large number of individual strands (4) which are twisted together and which are each formed from a plurality of individual wires (6A, 6B).

3. Earthing cable (2) according to Claim 2, in which only some of the individual strands (4) have combination wires (6B).

4. Earthing cable (2) according to the preceding claim, in which a respective individual strand (4) is formed from combination wires (6B) and single conductor wires (6A), in particular copper wires.

5. Earthing cable (2) according to one of Claims 2 to 4, in which at least one of the strands (4) is impregnated with a sealing compound.

6. Earthing cable (2) according to one of Claims 2 to 5, in which the conductor cross section which is formed by the individual strands (4) overall lies in the range of from 40 to 95 mm².

7. Earthing cable (2) according to one of the preceding claims, in which the wire core (12) is selectively a steel core or an aluminium core.

8. Earthing cable (2) according to one of the preceding claims, in which the proportion of the total wire core material lies in the range of between 1 and 10% by weight or in the range of between 10 and 50% by weight.

9. Earthing cable (2) according to one of the preceding claims, in which individual strands (4) which are of identical design and each have at least one combination wire (6B) are used.

10. Earthing cable (2) according to one of the preceding claims, comprising a cable sheath (8) in which a marking (10) which can be optically identified from the outside is made on the combination wires (6B) as an indicator.

11. Earthing cable (2) according to Claim 1,
- which is designed as an earthing line with a large number of individual strands (4) which are twisted together and which are each formed from a plurality of individual wires (6A, 6B), wherein
- the conductor cross section which is formed by the individual strands (4) overall lies in the range of from 40 to 95 mm²,
- combination wires (6B) with wire cores (12) composed of different metals are used,
- only some of the individual wires (6A, 6B) are designed as combination wires (6B),
- at least one of the strands (4) is impregnated with a sealing compound.

12. Railway device (16) with an earthing cable (2) according to one of the preceding claims fastened to it.

## Revendications

1. Câble (2) de mise à la terre destiné à raccorder à la terre des dispositifs (16) de chemin de fer, présentant plusieurs fils distincts (6A, 6B), au moins une partie des fils distincts étant configurée comme fils combinés (6B) qui présentent deux métaux différents, à savoir un fil d'âme (12) en un matériau non cuivreux entourée par une enveloppe (14) en cuivre, **caractérisé en ce que**
- seuls des fils de cuivre (6A) sont utilisés comme fils distincts en plus des fils combinés (6B),
- **en ce que** plusieurs fils combinés (6B) dont les fils d'âme (12) sont constitués de métaux différents sont utilisés et
- **en ce que** le rapport entre l'ensemble des matériaux de fils d'âme et le poids total de la somme des fils distincts (6A, 6B) est inférieur à 50 %.

2. Câble (2) de mise à la terre selon la revendication 1, configuré comme câble de mise à la terre présentant plusieurs torons (4) distincts torsadés les uns avec les autres et formés chacun de plusieurs fils distincts (6A, 6B).

3. Câble (2) de mise à la terre selon la revendication 2, dans lequel seule une partie des torons (4) distincts présente des fils combinés (6B).

4. Câble (2) de mise à la terre selon la revendication précédente, dans lequel chaque toron (4) distinct est formé de fils combinés (6B) et de fils conducteurs simples (6A), notamment de fils de cuivre.

5. Câble (2) de mise à la terre selon l'une des revendications 2 à 4, dans lequel au moins un des torons (4) distincts est englobé dans une pâte d'étanchéité.

6. Câble (2) de mise à la terre selon l'une des revendications 2 à 5, dans lequel la section transversale des conducteurs formés globalement par les torons (4) distincts est de l'ordre de 40 à 95 mm².

7. Câble (2) de mise à la terre selon l'une des revendications précédentes, dans lequel le fil d'âme (12) est au choix une âme d'acier ou une âme d'aluminium.

8. Câble (2) de mise à la terre selon l'une des revendications précédentes, dans lequel la proportion de l'ensemble du matériau de fil d'âme est comprise entre 1 et 10 % en poids ou entre 10 et 50 % en poids.

9. Câble (2) de mise à la terre selon l'une des revendications précédentes, qui utilise des torons (4) distincts de configuration identique dotés chacun d'au moins un fil combiné (6B).

10. Câble (2) de mise à la terre selon l'une des revendications précédentes, présentant une enveloppe de câble (8) dans laquelle est ménagé un marquage (10) visuellement détectable qui donne une indication sur les fils combinés (6B).

11. Câble (2) de mise à la terre selon la revendication 1,
- configuré comme câble de mise à la terre doté de plusieurs torons (4) distincts torsadés les uns avec les autres et formés chacun de plusieurs fils distincts (6A, 6B),
- dont la section transversale de conducteur globalement formées par les torons (4) distincts est de l'ordre de 40 à 95 mm²,
- dont les fils combinés (6B) utilisés présentent des fils d'âme (12) en différents métaux,
- dont seule une partie des fils distincts (6A, 6B) est configurée comme fils combinés (6B) et
- dont au moins un des torons (4) distincts est englobé dans une pâte d'étanchéité.

12. Dispositif de chemin de fer sur lequel est fixé un Câble (2) de mise à la terre selon l'une des revendications précédentes.
